(19) Europäisches Patentamt / European Patent Office / Office européen des brevets

(11) **EP 2 003 379 A1**

(12) **EUROPEAN PATENT APPLICATION**

(43) Date of publication:
**17.12.2008 Bulletin 2008/51**

(51) Int Cl.:
**F16K 7/17** *(2006.01)*

(21) Application number: **07110131.5**

(22) Date of filing: **12.06.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS**<br><br>(71) Applicant: **LUXEMBOURG PATENT COMPANY S.A.**<br>**7440 Lintgen (LU)** | (72) Inventors:<br>• **Schmitt, Jeannot**<br>  **7440 Lintgen (LU)**<br>• **Kremer, Paul**<br>  **7263 Walferdange (LU)**<br><br>(74) Representative: **Schmitt, Armand et al**<br>**Office Ernest T. Freylinger S.A.,**<br>**B.P. 48**<br>**8001 Strassen (LU)** |

(54) **High pressure diaphragm valve with exchangeable seat assembly**

(57)     A high pressure diaphragm gas valve comprises a seat assembly (32) removably fitted in a first end (22) of a valve chamber (20). This seat assembly (32) includes a mounting ring (34) and a synthetic seat ring (36), which forms a seat surface (40) in the valve chamber (20). A diaphragm (44) is sealing off the second end (24) of the valve chamber (20), wherein the diaphragm (44) has its outer rim (46) in sealing engagement with peripheral sealing means (42) of the seat assembly (32). The valve body (12) has, at the first end (22) of the valve chamber (20), a nozzle (60) axially protruding into the valve chamber (20), wherein a central gas port (28) is arranged in a front face (62) of the nozzle (60). This nozzle (60) sealingly penetrates into a central through hole (38) of the synthetic seat ring (36).

FIG. 1

# Description

## Technical field

The present invention generally relates to a high pressure diaphragm gas valve with an exchangeable seat assembly.

## Background Art

High pressure diaphragm valves with an exchangeable seat assembly are e.g. used as gas cylinder valves or as shut-off valves for high pressure toxic, corrosive, highly oxidizing or highly flammable gases, but also for high pressure inert gases. They show an excellent gas tightness and resistance to such high pressure gases.

Such a high pressure diaphragm valve with an exchangeable seat assembly is e.g. disclosed in US-A-5,215,286. It comprises a valve body having therein a valve chamber of a generally cylindrical configuration. This valve chamber has a bottom surface with a central gas inlet port and a lateral outlet port therein. A flexible multi-layer diaphragm seals the valve chamber at the opposite side of said first surface. A seat assembly is associated with the central gas inlet port, for cooperation with the diaphragm for controlling flow through the central gas inlet port. This seat assembly includes a resilient annular seat ring forming a seat surface facing the diaphragm and surrounding the central gas inlet port. A retaining ring member closely encircles the seat ring to limit radial outward expansion of the seat ring when engaged by the diaphragm and to maintain it located relative to the first port. The retaining ring overlies a portion of the seat ring and maintains a foot surface of the seat ring sealingly engaged around the central gas inlet port with the bottom surface of the valve chamber. A rigid metal sleeve is closely received within the seat ring and extends from the bottom surface of the valve chamber to adjacent the seat surface. The rigid metal ring and the retaining ring are coaxial with the seat ring and closely engage about the interior and exterior thereof to prevent radial deformation and axial deflection of the seat ring when the seal surface is engaged by the diaphragm. Actuating means, including a push rod and an actuator button, allow to selectively deflect the diaphragm into engagement with the seat surface. With the help of a sleeve or bonnet member, the outer rim of the diaphragm is sealingly clamped about its periphery to an upwardly extending bead on the retaining ring. A similar bead extends downwardly from ring and engages the bottom surface of the valve chamber.

It will be noted that the valve disclosed in US-A-5,215,286 has however some drawbacks. It will for example be appreciated that mounting a thin rigid metal sleeve into a through-hole of a synthetic seat ring is not very easy, in particularly not within the context of an automated production process of the seat assembly. Furthermore, a metal sleeve that is not well fixed in the synthetic seat ring may damage the synthetic seat ring or the diaphragm when the valve is closed or it may be ejected into the valve chamber, if a high velocity gas stream passes through the central gas inlet port. Furthermore, gas tightness of this prior art valve at very high pressures is largely dependent on the gas tightness that is achieved between the foot surface of the seat ring and the bottom surface around the central gas inlet port.

## Technical problems to be solved

A first technical problem underlying the present invention is to provide a high pressure diaphragm gas valve with a removable seat assembly that is easier to manufacture.

Another technical problem underlying the present invention is to provide a high pressure diaphragm gas valve including a synthetic seat ring that is better aligned relative to the central gas inlet port and better protected against deformation when the seat surface is engaged by the diaphragm.

A further technical problem underlying the present invention is to provide a high pressure diaphragm gas valve with a removable seat assembly that warrants a better gas tightness, in particular at higher gas pressures.

Still a further technical problem underlying the present invention is to provide a diaphragm gas valve that is particularly well suited for high pressure oxygen.

## General Description of the Invention

A high pressure diaphragm gas valve in accordance with the present invention generally comprises, in a manner known per se: a valve body with a valve chamber of generally cylindrical configuration having a central gas port arranged in a first end thereof; a seat assembly removably fitted in the first end of the valve chamber, to define a seat surface around the central gas port; a diaphragm sealing off the second end of the valve chamber; and means for pressing a central sealing surface of the diaphragm onto the seat surface. The diaphragm has an outer rim in sealing engagement with the peripheral sealing means of the seat assembly. The removable seat assembly includes, again in a manner known per se, a mounting ring and a synthetic seat ring. The mounting ring has a central hole and an outer rim. The synthetic seat ring is fitted in the central hole of the mounting ring. It has a central through hole therein and a front face forming the seat surface in the valve chamber.

In accordance with an aspect of the present invention, the valve body has, at the first end of the valve chamber, a nozzle axially protruding into the valve chamber, wherein this nozzle sealingly penetrates into the central through hole of the synthetic seat ring and has the central gas port arranged in its front face.

It will first be appreciated that in such valve, the function of the thin rigid metal sleeve, which is disclosed in US-A-5,215,286 to prevent radial deformation and axial deflection of the seat ring, is performed by the nozzle of the valve body penetrating into the central through hole of the synthetic seat ring. Consequently, there is no longer any need for fixing a thin rigid metal sleeve into the synthetic seat ring, which makes production of the seat assembly much easier. Furthermore, as the nozzle is an integral part of the valve body, it always warrants a perfect alignment of the synthetic seat ring and the central gas port, when the seat surface is engaged by the diaphragm. A misalignment of the seat ring and the central gas port is no longer possible. There is no longer a risk that a misaligned or loose rigid metal sleeve as disclosed in US-A-5,215,286 damages the seat ring or the diaphragm. It will also be appreciated that the nozzle provides a radial sealing function between the seat ring and the valve body and eliminates the possibility of gas leakage from the inlet channel into the outlet channel under the foot of the seat ring, whereby gas tightness of the valve is greatly improved. Last but not least, mounting of the seat assembly and the diaphragm is facilitated, because the seat assembly is already maintained in place by the nozzle before a sleeve or bonnet member or another means is used to fix the seat assembly in the valve chamber.

The front face of the nozzle is normally only slightly recessed with regard to the seat surface so as to provide an abutment surface for the central sealing surface of the diaphragm close to the seat surface. Such an abutment surface close to the deformable seat surface protects the seat ring and the diaphragm against over-deformation in case the valve is closed with too much force.

In a preferred embodiment of the valve, the nozzle has at its base a nozzle shoulder surface, and the synthetic seat ring has at the opposite side of the seat surface a seat ring foot surface that is pressed by the mounting ring onto the nozzle shoulder surface. It follows that a combination of a radial and axial sealing function is provided between the seat ring and the valve body, which allows to achieve, even at very high pressures, very low leakage rates.

A preferred embodiment of the synthetic seat ring comprises: a tubular body and a ring shaped the seat ring flange. The tubular body has an outer tube surface, an inner tube surface, a first end and an opposite second end, the first end having the seat surface thereon. The seat ring flange is located at the second end of the tubular body. It has a front face defining the seat ring foot surface and a rear face defining a seat ring flange shoulder surface.

In this preferred embodiment of the synthetic seat ring, the mounting ring advantageously comprises: a main ring body with at least one peripheral gas passage therein; a inner ring flange in which the synthetic seat ring is mounted so that its outer tubular surface is in sealing contact with a lateral surface of the inner flange and its seat ring flange shoulder surface is in sealing contact with a shoulder surface of the inner flange.

In the embodiment described in the preceding paragraph, the outer tube surface is advantageously a convex conical surface with a first cone apex angle, and the lateral surface of the inner flange is advantageously a concave conical surface with a second cone apex angle. The first cone apex angle is then advantageously bigger than the second cone apex angle. This difference in the cone apex angles warrants higher contact pressures, in particular between the inner tube surface of the synthetic seat ring and the outer surface of the nozzle, near the nozzle shoulder surface, whereby gas tightness is improved.

As described e.g. in US-A-5,215,286, a second gas port may be formed by an orifice arranged laterally of the central gas port, and an annular gas distribution channel may be provided between the main ring body and the bottom surface of the valve chamber. However, in a preferred embodiment of the valve, this second gas port is formed by an ring channel arranged in the first end of the valve chamber directly in the valve body, wherein it surrounds the nozzle shoulder surface and forms an annular gas distribution channel. In this case, the main ring body with the at least one peripheral gas passage therein penetrates into the ring channel, so as to laterally cover the seat ring flange and to form a narrow annular air gap with a cylindrical inner wall surface of the ring channel. This preferred embodiment of the valve has the advantage that the seat ring flange is better protected against deformation and against direct contact with a high velocity gas stream flowing through the open valve. Furthermore, this embodiment warrants a better fit of the seat assembly in the first end of the valve body.

In a preferred embodiment of the valve, the mounting ring comprises: a main ring body with several peripheral gas passages therein; an inner ring flange in which the synthetic seat ring is mounted; and an outer ring flange supporting the peripheral sealing means. In this embodiment, the peripheral sealing means advantageously comprises: a ring-shaped sealing bead protruding from the outer ring flange into the valve chamber; and a peripheral synthetic seal ring located radially between the sealing bead and a cylindrical valve chamber wall surface; wherein the outer rim of the diaphragm is in sealing engagement with the ring-shaped sealing bead and the peripheral synthetic seal ring. It will be appreciated that this embodiment not only provides an excellent sealing between the diaphragm and the mounting ring, but also between the mounting ring and the exterior wall of the valve chamber.

In a preferred embodiment, the front face of the nozzle is slightly recessed with regard to the seat surface. If "s" is the axial distance between the front face and the seat surface and "t" is the radial wall thickness of the nozzle, then following relation between should advantageously be fulfilled s and t:

$$0,1t < s < t.$$

Furthermore, if seat surface has an annular width "w", and "t" is the radial wall thickness of the nozzle, then following relation should advantageously be fulfilled between w and t:

$$0,8t < w < 1,1t.$$

A valve in accordance with the present invention is advantageously used as a gas cylinder valve or as a shut-off valve for high pressure toxic or corrosive gases, including high pressure oxygen.

**Brief Description of the Drawings**

A preferred embodiment of the invention will now be described, by way of example, with reference to the accompanying drawings in which:

Fig. 1 is a cross sectional of a valve in accordance with the invention;

Fig. 2 is an enlarged detail of the cross sectional view of Fig. 1;

Fig. 3 is a perspective view showing a section through the valve of Fig. 1; and

Fig. 4 is an enlarged detail of the cross sectional view of Fig. 2.

**Description of a Preferred Embodiment**

The valve 10 described-by way of example-with reference to the accompanying drawings, is a high pressure diaphragm shut off valve for equipping e.g. a gas cylinder containing toxic or corrosive gases at high pressures, i.e. pressures higher than 200 bar. It comprises a valve body 12, generally a brass or stainless steel body, with a socket 14 to be screwed into the gas cylinder (not shown). This screwed socket 14 has therein a gas inlet channel 16. A gas outlet channel 18 is arranged in a lateral branch 19 of the valve body 12. Both the inlet channel 16 and the outlet channel 18 open into a valve chamber 20 within the valve body 12.

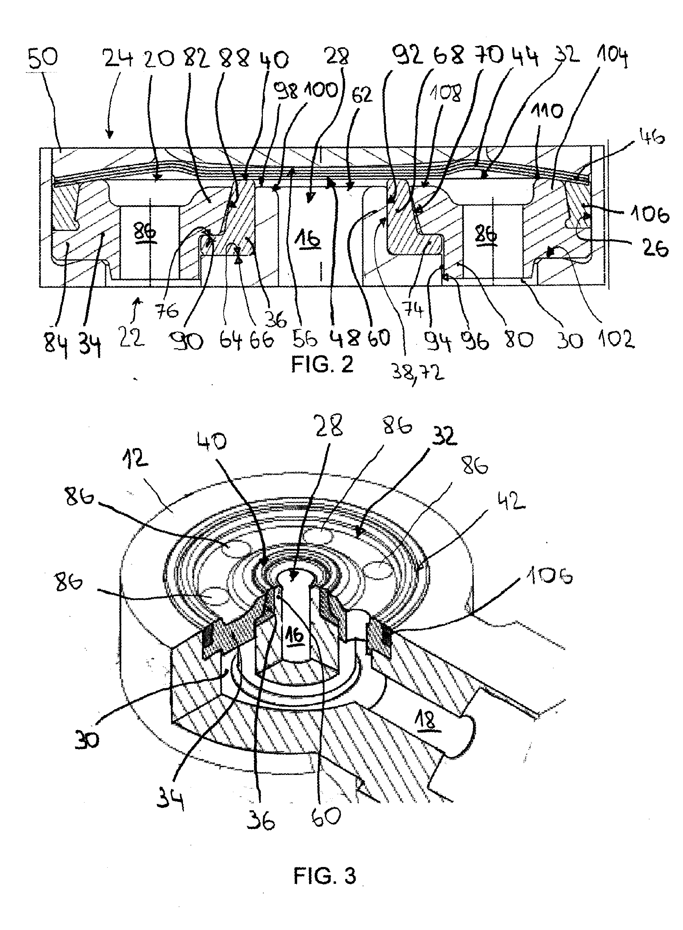

Referring more particularly to Fig. 2 and 3, it will be noted that the valve chamber 20 is a substantially cylindrical chamber having a first end (see arrow 22 in Fig. 2), a second end (see arrow 24 in Fig. 2), which is axially spaced from the first end 22, and a cylindrical valve chamber wall surface 26. The gas inlet channel 16 forms a central gas port 28, which is centrally arranged in the first end 22 of the valve chamber 20. The gas outlet channel 18 is connected to a ring channel 30 that surrounds the central gas port 28 and forms an annular second gas port in the first end 22 of the valve chamber 20, between the central gas port 28 and the cylindrical valve chamber wall 26.

Arrow 32 globally identifies a seat assembly that is removably fitted in the first end 22 of the valve chamber 20. This removable seat assembly 32 comprises a ring shaped mounting ring 34 with a central hole, a synthetic seat ring 36 and peripheral sealing means 42. The synthetic seat ring 36, which has a central through hole 38 therein, is mounted into the central hole of the ring shaped mounting ring 34, to form a seat surface 40 in the valve chamber 20. The material of the synthetic seat ring 36 is advantageously, but not necessarily, a thermoplastic polymer, preferably of the group of polyamides (Nylon®) or polychlorotrifluoroethylenes (KEL-F®). The mounting ring 34 is a rigid, generally a metallic body, e.g. a stainless steel or brass body. The peripheral sealing means, which will be described later on, is arranged along an outer rim of the ring shaped mounting ring 34.

Reference number 44 identifies a resilient diaphragm, which seals off said second end 24 of the valve chamber 20. This diaphragm 44 is preferably, but not necessarily, a multilayer diaphragm comprising a plurality of sandwiched flexible metal sheets. It has a central sealing surface 48 adjacent to the seat surface 40 and an outer rim 46 in sealing engagement with the peripheral sealing means 42 of the seat assembly 32. To provide this sealing engagement, a sleeve 50 is e.g. screwed into the valve body 12 so as to press the outer rim 46 of the diaphragm 44 onto the peripheral sealing means 42 of the seat assembly 32.

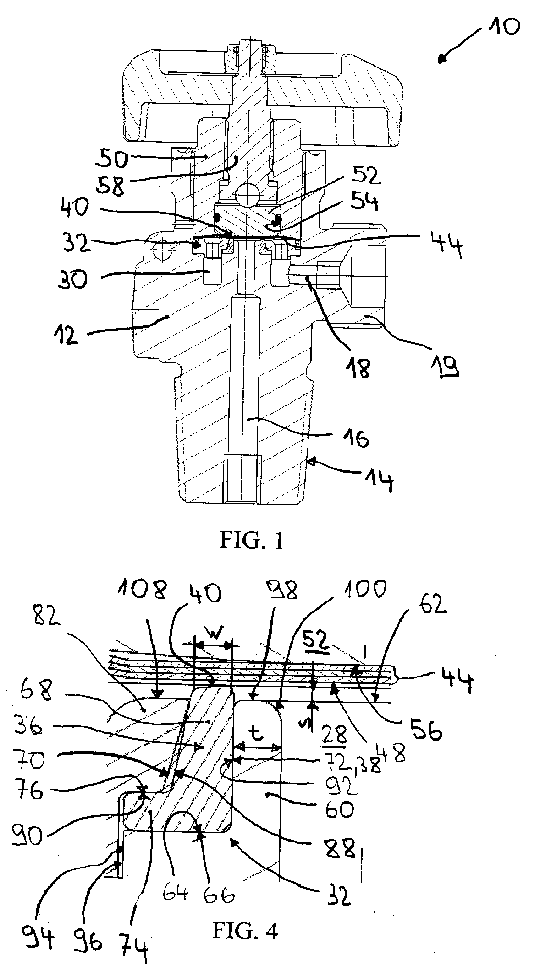

As is best seen on Fig. 1, an actuator button 52 is mounted into a frontal cavity 54 of the sleeve 50 in axial alignment with the central axis of seat surface 40 in the valve chamber 20. This actuator button 52 is axially guided within the frontal cavity 54 and has a front face 56 that can be brought in contact with the rear side of the diaphragm 44 (see Fig. 2 and Fig. 4). Referring back to Fig 1, it will be noted that a valve stem 58, which is screwed into the sleeve 50, allows to axially press the actuator button 52-in a manner known per se-in the direction of the seat assembly 32. Doing this, the diaphragm 44, which has initially the form of a concave calotte shell spanning over the seat assembly 32, is resiliently deformed, whereby its central sealing surface 48 is pressed onto the seat surface 40 of the seat assembly 32, thereby sealing off the gas inlet channel 16 from the valve chamber 20 and, consequently, from the gas outlet channel 18 (see Fig. 1). It will be noted that in Fig. 2 and Fig. 4, the central sealing surface 48 is close to the seat surface 40 of the seat assembly 32, but not yet in contact with the latter.

Novel features of the valve and, in particularly, of the seat assembly 32 are now described in greater detail, referring to Fig. 2, Fig. 3 and Fig. 4.

It will first be appreciated that the valve body 12 has, at the first end 22 of the valve chamber 20, a nozzle 60 axially protruding into the valve chamber 20. This nozzle 60 sealingly penetrates into the central through hole of the synthetic seat ring 36. The central gas port 28 of the gas inlet channel 16 is arranged in a front face 62 of the nozzle 60. This front face 62 is slightly recessed with regard to the seat surface 40.

The nozzle 60 has a nozzle shoulder surface 64 at its base, which is surrounded by the ring channel 30. The synthetic seat ring 36 has, at the axially opposite side of its seat surface 40, a seat ring foot surface 66 that is sealingly pressed by the mounting ring 34 onto the nozzle shoulder surface 64.

More particularly, the synthetic seat ring 36 comprises a tubular body 68 with an outer tube surface 70, an inner tube surface 72 delimiting the through hole 38 and a first end forming the seat surface 40. The inner tube surface 72 is a concave cylindrical surface, which is conceived to be in sealing contact with a cylindrical outer surface 92 of the nozzle 60. The outer tube surface 70 is a convex conical surface with a cone apex angle of about 30°. An opposite second end of the tubular body 68 is equipped with a radially extending ring shaped seat ring flange 74. The latter has a front face defining the aforementioned seat ring foot surface 66 and a rear face defining a seat ring flange shoulder surface 76.

The mounting ring 34 comprises a main ring body 80, a inner ring flange 82 and a outer ring flange 84. The main ring body 80 penetrates into the ring channel 30 and has several peripheral gas passages 86 therein, through which gas may flow from the inner valve chamber 20 into the ring channel 30. The synthetic seat ring 36 is mounted into the inner ring flange 82, so that its conical outer tube surface 70 is in sealing contact with a lateral conical surface 88 of the inner ring flange 82, and so that its seat ring flange shoulder surface 76 is in sealing contact with a shoulder surface 90 of the inner ring flange 82. Looking at Fig. 2 and Fig. 4, in which the conical outer tube surface 70 is shown in its original state (i.e. prior to mounting the synthetic seat ring 36 into the inner ring flange 82 and prior to the insertion of the nozzle 60 into the synthetic seat ring 36), it will be noted that the cone apex angle of this outer tube surface 70 is slightly bigger than the cone apex angle of the lateral conical surface 88 of the inner ring flange 82. This difference in the cone apex angles warrants higher contact pressures, in particular between the inner tube surface 72 of synthetic seat ring 36 and the cylindrical outer surface 92 of the nozzle 60, near the nozzle shoulder surface 64. Thus, an excellent tightness against high pressure gas leakage between the synthetic seat ring 36 and the valve body 12 is achieved.

Referring to Fig. 2 or Fig. 4, it will be noted that the synthetic seat ring 36 is confined within a seat ring chamber delimited radially to the inside by the cylindrical outer surface 92 of the nozzle 60, radially to the outside by the lateral conical surface 88 of inner ring flange 82 and by the main body 80 of the mounting ring 34 penetrating into the ring channel 30, and axially by the nozzle shoulder surface 64. Only the first end of the tubular body 68 protrudes out of this seat ring chamber. Particular attention is drawn to the fact that the main body 80 of the mounting ring 34 penetrating into the ring channel 30 first laterally covers the seat ring flange 74 and thereafter forms a very narrow annular air gap 94 with a cylindrical inner wall surface 96 of the ring channel 30. In summary, with the exception of the seat surface 40 itself, all surfaces of the synthetic seat ring 36 are well protected against deformation and against direct contact with a high velocity gas stream flowing through the open valve 10.

Referring more particularly to Fig. 4, it will be noted that the nozzle 60 forms a relatively thick metallic protecting rim 98 with a rounded outlet edge 100 close to the seat surface 40. In fact, the space "s" between the front face 62 of the nozzle 60 and the seat surface 40 is less than the wall thickness "t" of the nozzle 60 at the central gas port 28 (in the valve 10, s/t ≈ 0,3); and the wall thickness "t" of the nozzle 60 is about equal to the width "w" of the seat surface 40. When the valve 10 is opened, this metallic protecting rim 98 deviates the high velocity gas stream streaming out of the gas inlet channel 16 in such a way that a direct contact of this "sharp" stream with the synthetic sealing surface 40 is largely avoided. It will be appreciated that this feature is particularly important if the valve 10 is used e.g. with high pressure oxygen, i.e. if there is a risk of so called adiabatic compression shocks in the seat area.

Referring again to Fig. 2, it will be noted that the mounting ring 34 rests with its outer ring flange 84 on an outer shoulder surface 102, which surrounds the ring channel 30. This outer ring flange 84 supports the aforementioned peripheral sealing means 42, which comprises more particularly a ring-shaped sealing bead 104 and a peripheral synthetic seal ring 106. The ring-shaped sealing bead 104 protrudes from the outer ring flange 84 into the valve chamber 20. The peripheral synthetic seal ring 106 is located radially between the sealing bead 104 and the cylindrical valve chamber wall surface 26. The material of the synthetic seat ring 106 is advantageously, but not necessarily, a thermoplastic polymer, preferably of the group of polyamides (Nylon®) or polychlorotrifluoroethylenes (KEL-F®).

The sleeve 50 presses the outer rim 46 of the diaphragm 44 onto the ring-shaped sealing bead 104, whereby the peripheral synthetic seal ring 106 is axially compressed. Due to this axial compression, the synthetic seal ring 106 is also radially pressed on one side against sealing bead 104 and on the other side against the cylindrical valve chamber wall surface 26. Consequently, the synthetic seal ring 106 provides not only an improved sealing function between the diaphragm 44 and the mounting ring 34, but also an additional sealing function between the outer ring flange 84 of the mounting ring 34 and the valve chamber wall surface 26. It remains to be noted that the outer shoulder surface 102 forms a kind of axial stop face for the mounting ring 34. This axial stop face is dimensioned so that the inner ring flange 82 of the mounting ring 34 slightly compresses the synthetic seat ring flange 74 when the sleeve 50 presses the outer ring flange 84 of the mounting ring 34 firmly onto the outer shoulder surface 102.

Still referring to Fig. 2, it will be noted that the inner ring flange 82 of the mounting ring 34 has a front face 108 lying in a first plane, which contains the front face 62 of the nozzle 60. Furthermore, the ring-shaped sealing bead 104 has a annular crest surface 110 lying in a second plane, which contains the seat surface 40; wherein said first plane lies behind said second plane, when viewed in the direction the central sealing surface 48 of the diaphragm 44 is pressed onto the seat surface 40 of the seat assembly 32.

| | |
|---|---|
| 10 | valve |
| 12 | valve body |
| 14 | screw socket |
| 16 | gas inlet channel |
| 18 | gas outlet channel |
| 19 | lateral branch of 12 |
| 20 | valve chamber |
| 22 | first end of 20 |
| 24 | second end of 20 |
| 26 | cylindrical valve chamber wall surface |
| 28 | central gas port |
| 30 | ring channel |
| 32 | seat assembly |
| 34 | mounting ring |
| 36 | synthetic seat ring |
| 38 | central through hole in 36 |
| 40 | seat surface |
| 42 | peripheral sealing means on 34 |
| 44 | diaphragm |
| 46 | outer rim of 44 |
| 48 | central sealing surface of 44 |
| 50 | sleeve |
| 52 | actuator button |
| 54 | frontal cavity of 50 |
| 56 | front face of 52 |
| 58 | valve stem |
| 60 | nozzle |
| 62 | front face of 60 |
| 64 | nozzle shoulder surface |
| 66 | seat ring foot surface |
| 68 | tubular body |
| 70 | outer tube surface |
| 72 | inner tube surface |
| 74 | seat ring flange |
| 76 | seat ring flange shoulder surface |
| 80 | main body of 34 |
| 82 | inner ring flange |
| 84 | outer ring flange |
| 86 | peripheral gas passages |
| 88 | lateral conical surface of 82 |
| 90 | shoulder surface of 82 |
| 92 | cylindrical outer surface of 60 |
| 94 | annular air gap |
| 96 | cylindrical inner surface of 30 |
| 98 | protecting rim of 60 |
| 100 | outlet edge of 28 |
| 102 | outer shoulder surface of 12 |
| 104 | ring-shaped sealing bead of 34 |
| 106 | peripheral synthetic seal ring |
| 108 | front face of 82 |
| 110 | annular crest surface of 104 |

**Claims**

1. A high pressure diaphragm gas valve comprising:

a valve body (12) with a valve chamber (20) of generally cylindrical configuration therein, said valve chamber (20) having a first end (22) and a second end (24) that is axially spaced from said first end (22), and a central gas port (28) arranged in said first end (22);
a seat assembly (32) removably fitted in said first end (22) of said valve chamber (20), said seat assembly (32) including:

a mounting ring (34) with a central hole and an outer rim;
a synthetic seat ring (36) fitted in said central hole of said mounting ring (34), said synthetic seat ring (36) having a central through hole (38) therein and a front face forming a seat surface (40) in said valve chamber (20) around said central gas port (28); and
peripheral sealing means (42) along said outer rim of said mounting ring (34);

a diaphragm (44) sealing off said second end (24) of said valve chamber (20), wherein said diaphragm (44) has a central sealing surface (48) and an outer rim (46) in sealing engagement with said peripheral sealing means (42) of said seat assembly (32); and means for pressing said central sealing surface (48) of said diaphragm (44) onto said seat surface (40) of said seat assembly (32);
**characterized in that**
said valve body (12) has, at said first end (22) of said valve chamber (20), a nozzle (60) axially protruding into said valve chamber (20), wherein said central gas port (28) is arranged in a front face (62) of said nozzle (60); and said nozzle (60) sealingly penetrates into said central through hole (38) of said synthetic seat ring (36).

2. The valve as claimed in claim 1, wherein:

said front face (62) of said nozzle (60) is slightly recessed with regard to said seat surface (40), so as to provide a mechanical stop for said central sealing surface (48) of said diaphragm (44) close to said seat surface (40).

3. The valve as claimed in claim 1 or 2, wherein:

said nozzle (60) has at its base a nozzle shoulder surface (64); and
said synthetic seat ring (36) has at the opposite side of said seat surface (40) a seat ring foot surface (66) that is pressed by said mounting ring (34) onto said nozzle shoulder surface (64).

4. The valve as claimed in claim 3, wherein said synthetic seat ring (36) comprises:

a tubular body (68) with an outer tube surface (70), an inner tube surface (72), a first end and an opposite second end, said first end having said seat surface (40) thereon; and
a ring shaped seat ring flange (74) at said second end of said tubular body (68), said seat ring flange (74) having a front face defining said seat ring foot surface (66) and a rear face defining a seat ring flange shoulder surface (76).

5. The valve as claimed in claim 4, wherein said mounting ring (34) comprises:

a main ring body (80) with at least one peripheral gas passage (86) therein;
a inner ring flange (82) in which said synthetic seat ring (36) is mounted so that its outer tubular surface (70) is in sealing contact with a lateral surface (88) of said inner flange (82) and its seat ring flange shoulder surface (76) is in sealing contact with a shoulder surface (90) of said inner flange (82).

6. The valve as claimed in claim 5, wherein:

said outer tube surface (70) is a convex conical surface with a first cone apex angle, and said lateral surface (88) of said inner flange (82) is a concave conical surface with a second cone apex angle.

7. The valve as claimed in claim 6, wherein:

said first cone apex angle is bigger than said second cone apex angle.

8. The valve as claimed in as claimed in claim 5, wherein:

a second gas port is formed by an ring channel (30) arranged in said first end (22) of said valve chamber (20), wherein it surrounds said nozzle shoulder surface (64); and
said main ring body (80) with said at least one peripheral gas passage (86) therein penetrates into said ring channel (30), so as to laterally cover said seat ring (36) flange and to form a narrow annular air gap (94) with a cylindrical inner wall surface (94) of said ring channel.

9. The valve as claimed in claim 1, wherein said mounting ring (34) comprises:

a main ring body (80) with several peripheral gas passages (86) therein;
an inner ring flange (82) in which said synthetic seat ring (36) is mounted; and
an outer ring flange (84) supporting said peripheral sealing means (42).

10. The valve as claimed in claim 9, wherein said peripheral sealing means (42) comprises:

a ring-shaped sealing bead (104) protruding from said outer ring flange (84) into said valve chamber (20); and
a peripheral synthetic seal ring (106) located radially between said sealing bead (104) and a cylindrical valve chamber wall surface (26);

wherein said outer rim (46) of said diaphragm (44) is in sealing engagement with said ring-shaped sealing bead (104) and said peripheral synthetic seal ring (106).

11. The valve as claimed in claim 10, comprising:

a sleeve (50) mounted into said valve body (12) so as to press said outer rim (46) of said diaphragm (44) onto said ring-shaped sealing bead (104) and said peripheral synthetic seal ring (106);

wherein said means for pressing said central sealing surface (48) of said diaphragm (44) onto said seat surface (40) of said seat assembly (32) are mounted into said sleeve (50).

12. The valve as claimed in claim 9, 10 or 11, wherein:

said inner ring flange (82) has a front face (108) which lies in a first plane containing said front face (62) of said nozzle (60);
said ring-shaped sealing bead (104) has an annular crest (110) which lies in a second plane containing said seat surface (40); and
said first plane lies behind said second plane, when viewed in the direction said central sealing surface (48) of said diaphragm (44) is pressed onto said seat surface (40) of said seat assembly (32).

13. The valve as claimed in anyone of claims 1 to 12, wherein:

   said front face (62) of said nozzle (60) is slightly recessed with regard to said seat surface (40), and s is the distance between said front face (62) and said seat surface (40);
   said nozzle (60) has a wall thickness t at the central gas port (28); and $0,1t < s < t$.

14. The valve as claimed in anyone of claims 1 to 13, wherein:

   said nozzle (60) has a wall thickness t at the central gas port (28); said seat surface (40) has an annular width w, and $0,8t < w < 1,1t$.

FIG. 1

FIG. 4

9

FIG. 2

FIG. 3

European Patent
Office

## EUROPEAN SEARCH REPORT

Application Number

EP 07 11 0131

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 281 898 A (FUJIKIN KK [JP]) 5 February 2003 (2003-02-05) * paragraph [0018] - paragraph [0028]; figures 1,2 * ----- | 1-7,13, 14 | INV. F16K7/17 |
| A | US 2003/042459 A1 (GREGOIRE ROGER J [US]) 6 March 2003 (2003-03-06) * paragraph [0033] - paragraph [0043]; figures 2-5 * ----- | 1 | |
| A | US 2 902 048 A (RYAN JR JAMES F) 1 September 1959 (1959-09-01) * column 2, line 30 - column 3, line 36; figure 3 * ----- | 1 | |
| A | US 3 844 529 A (BRANDT R ET AL) 29 October 1974 (1974-10-29) * abstract; figure 3 * ----- | 1 | |

TECHNICAL FIELDS
SEARCHED      (IPC)

F16K

The present search report has been drawn up for all claims

| Place of search | Date of completion of the search | Examiner |
|---|---|---|
| Munich | 19 November 2007 | Rusanu, Irina |

EPO FORM 1503 03.82 (P04C01)

## ANNEX TO THE EUROPEAN SEARCH REPORT
## ON EUROPEAN PATENT APPLICATION NO.

EP 07 11 0131

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2007

| Patent document cited in search report | | Publication date | Patent family member(s) | | Publication date |
|---|---|---|---|---|---|
| EP 1281898 | A | 05-02-2003 | DE 60203031 | D1 | 31-03-2005 |
| | | | DE 60203031 | T2 | 02-03-2006 |
| | | | JP 2003042314 | A | 13-02-2003 |
| | | | KR 20030012811 | A | 12-02-2003 |
| | | | TW 531620 | B | 11-05-2003 |
| | | | US 2003025099 | A1 | 06-02-2003 |
| US 2003042459 | A1 | 06-03-2003 | NONE | | |
| US 2902048 | A | 01-09-1959 | NONE | | |
| US 3844529 | A | 29-10-1974 | CA 1016465 | A1 | 30-08-1977 |
| | | | DE 2421909 | A1 | 28-11-1974 |
| | | | FR 2228974 | A1 | 06-12-1974 |
| | | | JP 1100776 | C | 18-06-1982 |
| | | | JP 50069620 | A | 10-06-1975 |
| | | | JP 56042767 | B | 07-10-1981 |

EPO FORM P0459

For more details about this annex : see Official Journal of the European Patent Office, No. 12/82

**EP 2 003 379 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5215286 A